# EUROPEAN PATENT APPLICATION

(11) **EP 1 806 892 A1**
(43) Date of publication of application: **11.07.2007**
(21) Application number: 06290066.7
(22) Date of filing: 10.01.2006
(51) Int. Cl.: H04L 27/26, H04L 5/02, H04L 25/03

(54) **Method of separating signals in a cellular multicarrier telecommunication system**

(71) Applicant: Alcatel Lucent, 75008 Paris (FR)
(72) Inventor: Rheinschmitt, Rubert, Dipl.-Ing., 70825 Korntal (DE)
(74) Representative: Richardt, Markus Albert

(57) **Abstract**

Aspects of the invention relate to a cellular multi-carrier telecommunication system, e.g. a cellular OFDM system.

It is an object of an embodiment the invention to provide a method, a computer program, a computer program product, a terminal device and a base station with which the signals in such a multi-carrier system can be separated from each other even if another signal, or even a multitude of such signals, occupies the same frequency band.

In one embodiment it is suggested that cells of the telecommunication system use pilot systems different from each other, such that the signals can be separated with the help of the pilot systems stored in a terminal device.

## Description

### Background

Telecommunication systems using multi-carrier transmission are well known. They use a multitude of electromagnetic carrier waves, also called sub-carriers, to transmit information. Examples are digital subscriber line (DSL) modems or systems operating according to the digital audio broadcasting standard (DAB). In these examples the transmission is based on orthogonal frequency division multiplexing (OFDM).

Recently it has been discussed to use multi-carrier telecommunication systems for cellular mobile radio communication. As in all cellular telecommunication systems this brings the focus to the problem of interference. Since in a cellular system resources like frequencies or codes are reused in some distance, signal reception may be distorted by interference.

### Summary of the invention

It is an object of an embodiment of the invention to provide a cellular telecommunication system employing multi-carrier transmission which can separate different multi-carrier signals.

This object is solved by the features of the independent claims. Further embodiments of the claimed invention are described by the features of the sub-claims.

An aspect of the invention relates to a method of separating electromagnetic signals in a cellular telecommunication system. The signals comprise a multitude of sub-carriers of different frequencies. In other words the telecommunication system is a cellular multi-carrier transmission system, e.g. a OFDM system.

The telecommunication system may comprise base stations or access points being adapted to communicate with a terminal device by said signals. The signals might be exchanged over a cable or in a wireless fashion over the air interface. In the latter case the terminal device can be a mobile terminal device such as a mobile phone, a laptop, a notebook, a personal digital assistant (PDA) or another suitable electronic device adapted to receive such signals over the air interface. Every device of said type may use embodiments described in this description.

In a first step of this aspect of the invention a signal mix is received which comprises a first signal S1 and at least a second signal S2. For sake of clarity only the case of two received signals will be described below, but it will be apparent for the man skilled in the art that this embodiment also works in the case of 3,4, ...n received signals, n being an integer.

The two signals S1 and S2 may be received simultaneously or with a certain time offset. In the first case the sources of the two signals, e.g. two base stations, might be synchronized with each other, in the second case there might be non-synchronism. The two signals S1 and S2 are associated with two pilot systems P1 and P2, the two pilot systems being different from each other.

In this disclosure a signal should be understood to be comprised of a multitude of multi-carrier symbols, e.g. OFDM symbols. Each multi-carrier symbol comprises data symbols and pilot symbols. Data symbols represent user information such as voice data, text data etc, whereas pilot symbols are used by multi-carrier reception devices for a channel estimation. On a physical level the data symbols and the pilot symbols of each multi-carrier symbol are transported by a multitude of sub-carriers. A sub-carrier carrying a pilot symbol within this multi-carrier symbol is called pilot and has a frequency called pilot frequency. The term "pilot system" describes the pattern in which the pilot symbols are distributed in the signal.

The signal mix S1+S2 is demodulated with information on the pilot system P1 associated with the first signal S1 and with information on the pilot system P2 associated with the second signal S2, whereby the two signals are separated from each other. This means that the pilot systems are used as a characterizing feature in order to separate the signals S1 and S2. As the two signals S1 and S2 occupy the same space in time and frequency their separation is based on a difference, namely the pilot system, other than time or frequency. This is called multi-user detection.

The embodiment described above enables to separate even strongly interfering signals, minimises the probability of errors resulting in retransmissions or the need for extensive forward error correction measures and thus improves the spectral efficiency.

In another embodiment the pilot systems of S1 and S2 define different sub-carriers to carry pilot symbols. In this case the pilot symbols of the two signals are carried by pilots having different frequencies. The first signal S1 has at least one pilot frequency it uses for carrying pilot symbols which the second signal S2 does not use.

In another embodiment, which is related to synchronised base stations, the pilot systems are temporally de-coupled, i.e. the above-mentioned definitions for the pilot systems change over time. This includes the possibility that the changes for two pilot systems occur at different times.

In another embodiment the pilot systems are different from each other as their pilot symbols are derived with different codes of a code set. In this case the two signals might use the same pilot frequencies for carrying pilot symbols, but the pilot symbols are different from each other. The pilot symbols may be selected according to a specific code system. Each cell may use a different code which allows a separation of the different multi-carrier signals transmitted from each cell.

In another embodiment the multitude of pilot frequencies of a signal, or a representation thereof, is arranged as a vector (pilot vector), and the pilot vectors of the first signal and of the second signal are linearly independent. This embodiment makes use of the fact that in principle it is sufficient that the pilot systems are different from each other by a single feature which can be detected in some way or another. Each signal uses a multitude of pilots, and their set of (pilot) frequencies (or a representation of them) can be arranged in a predefined way as a vector. This vector is called pilot vector. If, generally speaking, the pilot vectors of two signals are linearly independent they can be separated from each other by means of the pilot systems used.

If the pilot vectors are additionally orthogonal to each other the signal separation becomes easier than for signals with non-orthogonal pilot vectors.

Another aspect of the invention suggests that the first signal and the second signal originate from two different cells. In this case different cells use different pilot systems, and the embodiments mentioned above make it possible to distinguish a first signal of a first cell from the second signal of a second cell. Thus a signal separation in a cellular telecommunication system, possibly a wireless telecommunication system, can be accomplished. A sub-carrier used in the first cell can then be reused for the same purpose in the second cell. In other words a frequency reuse of 1 can be accomplished.

If different cells of the telecommunication system use different pilot systems the cells may use different sub-carriers to carry pilot symbols. This may be achieved in the telecommunication system by using a set of rules defining the pilot system frequencies for the cells. As a frequency reuse of 1 can be accomplished the number of pilot systems is far smaller than the number of cells.

In another embodiment the first signal and the second signal originate from two cells adjacent to each other. As the first signal of a first cell and the second signal of the second cell can be distinguished from each other by means of the different pilot systems, this can generally be employed in situations where signals of more than one cell of a cellular telecommunication system can be received. In practical terms this situation is most likely to happen for signals originating from two neighbouring cells, and particularly when the first signal and the second signal originate from two cells adjacent to each other.

As a practical example the first signal S1 may originate from a serving base station such that the second signal S2 can be regarded as an interferer. As the two signals can be separated from each other on the basis of their pilot systems the interference contribution S2 in the signal mix S1+S2 can be determined. As a consequence, signal S1 can be received with high quality without disturbing noise from S2. As a matter of fact, this scenario can be generalized for situations with further signals S3, S4 ...Sn from other cells, n being an integer. In this case further interference contributions S3, S4 ... Sn can be separated from the wanted signal S1.

In an example embodiment the method comprises the step of receiving information on the pilot systems. As can be derived from the above explanations the method can be applied by a device, e.g. a mobile terminal device, which separates the signals it receives, e.g. signals from different cells. This can be accomplished when the device knows in some way or another the underlying pilot systems associated with the signals it receives.

For that purpose information on the pilot systems may be permanently stored in a memory unit, e.g a FPGA or an ASIC, of the device. The device, e.g. a mobile phone, may be equipped with this memory unit when bought by the customer. Another possibility is that the device receives this information from the telecommunication system. If it is a wireless telecommunication system the information may be downloaded over the air interface. It may then be stored in a memory unit for future use, and may be updated from a base station if the wireless device moves within the telecommunication system. In the latter case less information needs to be stored as only information on pilot systems from nearby cells need to be known. It is also possible to use a scheme in which each base station of the cellular communication system broadcasts its own pilot system, e.g. by transmission over a broadcast channel. Then the terminal device evaluates the set of base stations and hence pilot systems actually visible.

In another embodiment the information on the pilot systems attributes different pilot systems to different cells of the telecommunication system. This may be the case in a cellular telecommunication system in which different cells have different pilot systems.

In another embodiment the information on the pilot systems S1 and S2 is used to estimate the channels / channel transfer functions of the first signal and the second signal. This process is called channel estimation. The channel is the Fourier transform of the channel impulse response. This Fourier transform is called the channel transfer function. This is always possible when the pilot vectors are linearly independent. All calculated channel transfer functions Hᵢ(f,t) (the index i denotes the signal in the signal mix the device receives, in the current example i=1, 2) are then used to demodulate the signal mix, thereby identifying the individual signals contributing to the signal mix, and thereby separating the individual signals.

When a device receives the signal mix S1+S2 it can use at least two approaches for demodulating the signals.

One possibility is to use AWGN demodulation, which assumes that only one useful signal S1 is present and that all distortions S2, ... Sn apart from the channel impact can be modelled as additive white Gaussian noise. This demodulation scheme can be extended in a way that some statistical criterion, e.g. a second order moment modelling of the noise S2, ... Sn is introduced, thereby improving the demodulation process.

Another possibility is to carry out a multi-user detection, in which the whole demodulation process is based on a modelling of the received signal as being composed of several user signals each distorted by its own transmission channel.

In another embodiment the multi-user detection is a maximum likelihood (ML) detection or a maximum a posteriori probability (MAP) detection.

In a further embodiment the output of the channel estimation serves as an input for a demodulation.

Another embodiment carries out a channel estimation and demodulation in a single step. In this case a joint data and channel estimation is carried out and the estimation of the channel is embedded into the demodulation. Various hypotheses not only for the data but also for the channel are then evaluated.

According to another embodiment of the invention, the multi-user detection scheme is based on a maximum likelihood detection or on a maximum a posteriori probability detection. In the first case Viterbi, soft Viterbi and reduced state Viterbi algorithms can be used. In the latter case a full maximum a posteriori probability (MAP) can be carried out, or a reduced state MAP.

A further embodiment uses an iterative channel estimation. The iterative channel estimation concept is especially suitable for a system such as an OFDM system. Channel estimation starts from the already known pilot system stored in the device. This allows a first demodulation step. Based on the first step estimates for the data symbols the channel estimation can be improved since the scope of the known data has been broadened. The improved channel estimation allows a second improved data detection. More iterations may follow.

According to another embodiment a demodulation based on the Turbo concept is carried out. In this case it is possible to combine in an iterative way an information gained during the demodulation process with information stemming from the decoding process reflecting the used coding and interleaving scheme.

In another embodiment the signals are OFDM signals.

It should be emphasized that a signal separation as disclosed above in the numerous embodiments is not restricted to a synchronization of the signals, e.g. of the base stations from which the signals originate. Although the above ways of separating the signals work best with perfect synchronization, a synchronization is not a prerequisite. If the correlation in time and frequency is known or may be estimated by appropriate algorithms, then at least sub-optimal algorithms may be derived. Increased complexity is the consequence. In this way the separation is not restricted to synchronized base stations.

As can already be derived from the above explanations the method is at least partially carried out by means of a computer program residing in a device, e.g. a terminal device which can be a mobile terminal device.

In accordance with an embodiment of the invention the pilot systems define different sub-carriers to carry pilot symbols. In particular the pilot systems may define different sub-carriers to carry pilot symbols, and wherein the definition varies over time. Further, the pilot symbols of the different pilot systems can be derived from different codes of a code set.

In accordance with an embodiment of the invention the multitude of pilot frequencies of a signal, or a representation thereof, is arranged as a vector (pilot vector), and the pilot vectors of the first signal and of the second signal are linearly independent.

In accordance with an embodiment of the invention, the first signal and the second signal originate from two different cells. In particular, the first signal and the second signal may originate from two cells adjacent to each other.

In accordance with an embodiment of the invention information on the pilot systems is received, wherein the information on the pilot systems may attribute different pilot systems to different cells of the telecommunication system.

The embodiments described above can be realized in hardware, software, or a combination of hardware and software. Any kind of computer system - or other apparatus adapted for carrying out the methods described herein - is suited. A typical combination of hardware and software could be a DSP (digital signalling processor) with a computer program that, when being loaded and executed, controls the DSP such that it carries out the methods described herein. The embodiments of the present invention can also be embedded in a computer program product, which comprises all the features enabling the implementation of the methods described herein, and which - when being loaded in a computer system - is able to carry out these methods.

Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

Other embodiments of the invention relate to a base station and a terminal device, each of them of a cellular telecommunication system, e.g. a cellular OFDM system, which are adapted to employ the embodiments described above. In operation, the base station and/or the terminal device might comprise a computer system, e.g. a DSP, which are used for running the computer program mentioned above.

These and other aspects of the claimed invention will be apparent from and elucidated with reference to the embodiments described thereafter. It should be noted that the use of reference signs shall not be construed as limiting the scope of the invention.

### Brief description of the drawings

- Figure 1: shows a cellular communication network,
- Figure 2: shows a multiple signal reception in the cellular configuration,
- Figure 3: shows a flowchart illustrating the use of the method to separate the signals received by a terminal device.

### Detailed description of the drawings

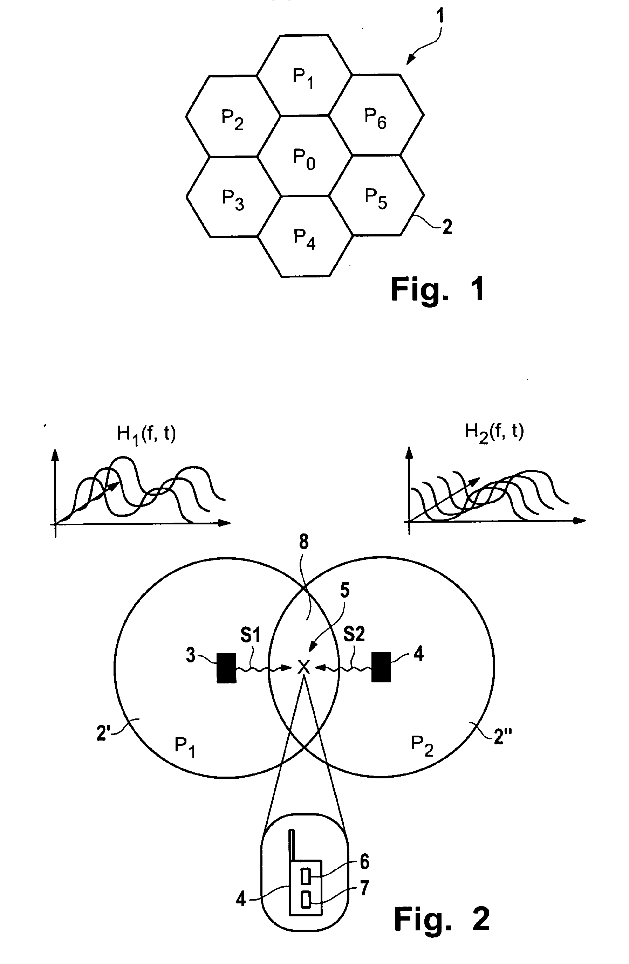

Fig. 1 shows a cellular multi-carrier communication network 1. Network 1 has cells 2 arranged in a hexagonal structure. The central cell has a pilot system P₀ and is adjacent to six cells 2, the six cells 2 having pilot systems P₁ to P₆. All the pilot systems are different to each other. If a mobile terminal is located somewhere in the borderline region between two cells, it receives at least one interfering signal from a neighbouring cell in addition to the signal of the serving cell.

Fig. 2 shows such an interference situation in more detail. Base station 3 is covering a first cell 2' and uses the pilot system P₁ to send a signal S1. Base station 4 is covering a second cell 2" and uses the pilot system P₂ to send a signal S2. Both signals are OFDM signals transmitted by the base stations 3,4 which are in general not synchronized. A mobile terminal 5, e.g. a notebook, a laptop, a mobile phone, a PDA or any other electronic device suitable for receiving and processing wireless OFDM signals, is located in the overlap region 8 between these two base stations 3, 4. Accordingly, the mobile terminal 5 receives a signal mix S1+S2.

Each signal S1 and S2 is received as a multitude of components, the components having travelled along physically different transmission paths. Each transmission path gives rise to a different signal distortion. This is indicated by the two plots in Fig. 2, which show the channel transfer function H₁(f,t) corresponding to signal S1, and the channel transfer function H₂(f,t) corresponding to signal S2. Thus i=1 for S1 and i=2 for S2. Each channel transfer function is plotted versus frequency f and time t. If Hᵢ(f,t) is known the original signal can be derived as Hᵢ(f,t) expresses the distortion of the signal along the transmission path.

The mobile terminal 5 is provided with the pilot systems associated with the signals S1 and S2. The pilot systems are stored in memory unit 6 of terminal device 5. They may be received over the air interface from the serving base station 3. If the mobile terminal 5 moves within the cellular telecommunication system 1 this information on the pilot system may be automatically updated. With the possibility to update this information only a few pilot systems need to be stored in memory unit 6. As an example, only pilot systems of cells adjacent to the cell in which the mobile terminal 5 is located might be stored.

Terminal device 5 estimates, i.e. calculates, with each pilot system the channel transfer functions Hᵢ(f,t) out of the signal mix S1+S2. This is done by a DSP (not shown). With the Hᵢ(f,t) thus obtained the separation of the signals S1 and S2 can be carried out.

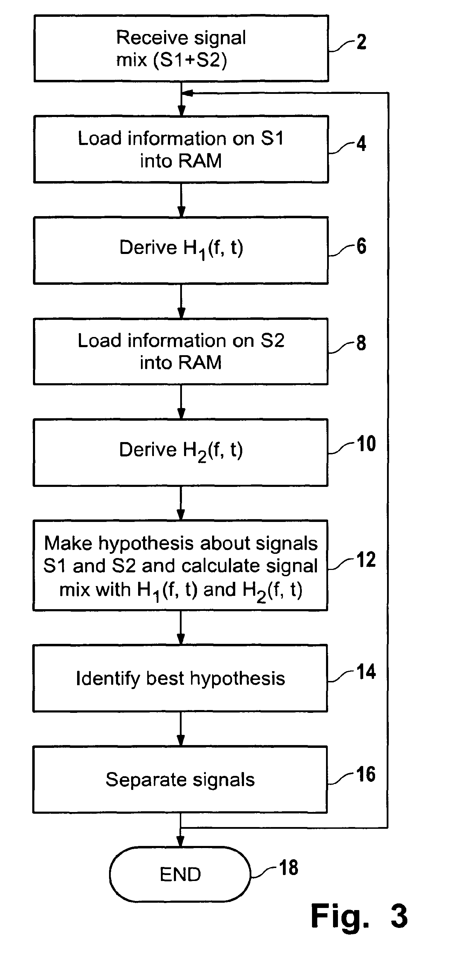

The way in which the signals S1 and S2 are separated from each other is illustrated in the flowchart of Fig. 3.

In step 2 the signal mix S1+S2 is received by the mobile terminal 5. The mobile terminal 5 has information on the pilot systems P₁ and P₂ in an memory unit 6. Memory unit 6 may be an FPGA.

In step 4 the information on the signal S1 is loaded into a memory, e.g. a RAM (random access memory) 7. When the demodulation is initiated, this information on S1 relates to the pilot system P₁.

In step 6 the pilot system P₁ is used to derive a first channel transfer function H₁(f,t) out of the signal mix S1+S2.

In step 8 the information on the second signal S2 is loaded into RAM 7. When the demodulation is initiated, this information relates to the pilot system P₂

In step 10 the second channel transfer function H₂(f,t) is derived from signal mix S1+S2. H₂(f,t) relates to S2 and is derived with P₂. This stepwise processing implies that H₂(f,t) is derived after H₁(f,t). However, the estimation of the Hᵢ(f,t) may also be achieved in a single, combined step.

With the Hᵢ(f,t) calculated, all the signals contained in the signal mix can be demodulated and also separated. Based on hypotheses about the original signals, cf. step 12, and with the channel knowledge, the signal mix can be modelled and the best hypothesis may be selected, cf. step 14. A result of this processing is the modelled signals S1 and S2, cf. step 16.

The technique sketched in the last paragraph is well known and exists in many variants. So any method based on maximum likelihood (ML) detection or maximum a posteriori probability (MAP) detection can be used. With the selection of the best hypothesis according to the metric of the algorithm used, all the signals are demodulated and thereby separated.

When the demodulation is initiated the steps 2 to 16 are carried out as described above. Processing may be carried out in an iterative way. In this case the demodulated signals may be used for improved channel estimation. Thus after completion of step 16 a reiteration starting from step 4 may be envisaged, however this time using the whole signals as a result of step 16, and not only the pilots. Several reiterations are possible. A variety of criteria may be envisaged for deciding on further iterations, e.g. if changes in signals S1 and S2 between two iterations are smaller than a threshold value the method stops with step 18.

The channel estimation and demodulation steps may also be carried out in an integrated fashion. So steps 4 and 8 may be integrated in one step. Similarly, steps 6, 10 and 12 can be combined into a single combined step.

### List of Reference Numerals

- 1: Cellular telecommunication system
- 2: Cell
- 2': Cell
- 2": Cell
- 3: Base station
- 4: Base station
- 5: Terminal device
- 6: Memory unit
- 7: RAM
- 8: Overlap region
- S1: First signal
- S2: Second signal
- P₁..P₆: Pilot system
- H₁(t,f): Channel transfer function
- H₂(t,f): Channel transfer function

## Claims

1. Method of separating a plurality of electromagnetic signals in a cellular telecommunication system, each signal of the plurality of electromagnetic signals comprising a multitude of sub-carriers, the method comprising the following steps:
a) receiving a signal mix comprising at least of first signal and at least a second signal of the plurality of electromagnetic signals, the first signal and the second signal being associated with different pilot systems,
b) demodulating the signal mix with information on
b1) the pilot system of the first signal, and
b2) the pilot system of the second signal
whereby the signals are separated.

2. Method according to claim 1, wherein the information on the pilot systems is used to estimate the channel transfer functions of the first signal and the second signal (channel estimation), and wherein a demodulation is carried out on the basis of the channel transfer functions.

3. Method according to claim 1, wherein the signal mix is demodulated on the basis of an AWGN demodulation or on the basis of a multi-user detection approach.

4. Method according to claim 1, wherein the multi-user detection is maximum likelihood detection or maximum a posteriori probability detection.

5. Method according to claim 1, wherein the output of the channel estimation serves as an input for a demodulation, or that channel estimation and demodulation are carried out in a single step.

6. Method according to claim 1, wherein channel estimation, demodulation and decoding functionalities are combined according to the Turbo concept.

7. Method according to any preceding claim, wherein the first signal and the second signal are OFDM signals.

8. A computer program product stored on a computer usable medium, comprising computer readable program means for causing a computer to perform a method according to any of the claims 1 to 7 when said program is run on said computer.

9. Terminal device of a cellular telecommunication system, being adapted to carry out the method according to any of the claims 1 to 7.

10. Base station of a cellular telecommunication system, being adapted to carry out the method according to any of the claims 1 to 7.

## Amended claims

### Amended claims in accordance with Rule 86(2) EPC.

**1.** Method of separating a plurality of electromagnetic signals (S1, S2) in a cellular telecommunication system (1), each signal of the plurality of electromagnetic signals comprising a multitude of sub-carriers, the method comprising the following steps:
a) receiving a signal mix (S1+S2) comprising at least of first signal (S1) and at least a second signal (S2) of the plurality of electromagnetic signals, the first signal and the second signal being associated with different pilot systems (P1, P2), each one of said pilot systems being associated with a respective cell (2, 2', 2") of the cellular telecommunication system,
b) demodulating the signal mix with information on
b1) the pilot system (P1) of the first signal, and
b2) the pilot system (P2) of the second signal
whereby the signals are separated,
**characterised in that** the method further comprises:
c) receiving, at a terminal device (5), information on the pilot systems from the telecommunication system; and
d) storing said information at the terminal device for use in accordance with step b).

**2.** Method of claim 1, further comprising, in a wireless telecommunication system (1), downloading the information over the air interface and updating said information from a base station (3, 4) if the terminal device (5) moves within the telecommunication system.

**3.** Method of claim 1, further comprising storing only information on pilot systems (P0-P6) from nearby cells (2, 2', 2") in the telecommunication system (1).

**4.** Method of claim 1, further comprising using a scheme in which each base station (3, 4) of the cellular communication system (1) broadcasts its own pilot system (P1, P2), e.g., by transmission over a broadcast channel, and evaluating a set of base stations and hence pilot systems actually visible at the terminal device (5).

**5.** Method according to claim 1, wherein the information on the pilot systems (P1, P2) is used to estimate the channel transfer functions (H₁, H₂) of the first signal (S1) and the second signal (S2) to form a channel estimation, and wherein a demodulation is carried out on the basis of the channel transfer functions.

**6.** Method according to claim 1, wherein the signal mix (S1 +S2) is demodulated on the basis of an AWGN demodulation assuming that only one useful signal (S1) being present and modelling all other signals (S2) apart on a channel impact as additive Gaussian white noise, AGWN, or on the basis of a multi-user detection approach.

**7.** Method according to claim 6, wherein the multi-user detection is maximum likelihood detection or maximum a posteriori probability detection.

**8.** Method according to claim 5, wherein the output of the channel estimation serves as an input for a demodulation, or that channel estimation and demodulation are carried out in a single step.

**9.** Method according to claim 5, wherein channel estimation, demodulation and decoding functionalities are combined according to the Turbo concept.

**10.** Method according to any preceding claim, wherein the first signal and the second signal are OFDM signals.

**11.** A computer program product stored on a computer usable medium, comprising computer readable program means for causing a computer to perform a method according to any of the claims 1 to 10 when said program is run on said computer.

**12.** Terminal device of a cellular telecommunication system, being adapted to carry out the method according to any of the claims 1 to 10.

**13.** Base station of a cellular telecommunication system, being adapted to carry out the method according to any of the claims 1 to 10.
